# EUROPEAN PATENT APPLICATION

(11) **EP 4 718 640 A1**
(43) Date of publication of application: **01.04.2026**
(21) Application number: 25204395.5
(22) Date of filing: 24.09.2025
(51) Int. Cl.: H01R 13/6477, H01R 24/44, H01R 24/50, H01R 24/54, H01R 43/16

(54) **3D PRINTED ANGLED COAXIAL CONNECTOR**

(30) Priority: 26.09.2024 US 202418897820
(71) Applicant: TE Connectivity Solutions GmbH, 8200 Schaffhausen (CH)
(72) Inventor: LUO, Xiaoming, Middletown, 17057 (US); ROSENAU, Joshua, Middletown, 17057 (US); BLASICK, Francis John, Middletown, 17057 (US); CHAMPION, Bruce Allen, Middletown, 17057 (US)
(74) Representative: Ashton, Gareth Mark

(57) **Abstract**

A swept angle RF connector (10) having a 3D printed conductive shell (12) formed in one piece. A dielectric insert (14) positioned in a dielectric receiving passage (28), the dielectric insert is in the shape of a swept angle and has a circular cross section. A center contact (16) is positioned in a contact receiving passage (34), the center contact is in the shape of a swept angle and has a circular cross section. The connector has a voltage standing wave ratio below 1.2 for signal frequencies up to 65GHz.

## Description

The invention relates generally to a coaxial connector assembly. In particular, the invention relates to an angled coaxial connector assembly which can be mounted to a substrate.

Right-angle coaxial connector assemblies are often used to terminate a coaxial cable to a circuit board or panel. However, these connector assemblies often fail to maintain the desired signal integrity. In particular, the panel mount right-angle connector assemblies are often associated with poor voltage standing wave ratio (VSWR).

It would, therefore, be beneficial to provide an angled coaxial connector assembly in which the internal contact is in the form of an angle, including a swept right angle, and which provided the required VSWR at high signal frequencies. In particular, it would be beneficial to provide an angled coaxial connector assembly which occupies minimal board space and which can be easily manufactured.

The solution is provided by a swept angle RF connector having a 3D printed conductive shell formed in one piece. The conductive shell has a mating connector receiving portion with a mating connector receiving surface and a mounting portion with mounting surface, the mating connector receiving surface extending in a plane which is essentially perpendicular to a plane in which the mounting surface extends. An arcuate portion extends between the mating connector receiving portion and the mounting portion. A dielectric receiving passage is provided in the arcuate portion, the dielectric receiving passage is in the shape of a swept angle or arc of a circle and has a circular cross section. A dielectric insert is positioned in the dielectric receiving passage. The dielectric insert is in the shape of a swept angle or arc of a circle and has a circular cross section which extends from a first surface proximate the mating connector receiving portion to a second surface proximate the mounting portion, the first surface extending in a plane which is essentially perpendicular to a plane in which the second surface extends, a contact receiving passage extending through the dielectric insert from the first surface to the second surface. A center contact is positioned in the contact receiving passage, the center contact is in the shape of a swept angle or arc of a circle and has a circular cross section.

The invention will now be described by way of example with reference to the accompanying drawings in which:
FIG. 1 is a perspective front view of a first illustrative embodiment of a swept right angle RF connector according to the present invention.
FIG. 2 is a side view of the connector of FIG. 1.
FIG. 3 is a bottom view of the connector of FIG. 1
FIG. 4 is a cross-sectional view connector taken along line 4-4 of FIG. 3.
FIG. 5 is a perspective view of an illustrative embodiment of a center insert of FIG. 4, showing the center contact and the dielectric material which surrounds the center contact.
FIG. 6 is a perspective front view of a second illustrative embodiment of a swept right angle RF connector according to the present invention.
FIG. 7 is a side view of the connector of FIG. 6.
FIG. 8 is a bottom view of the connector of FIG. 6
FIG. 9 is a cross-sectional view connector taken along line 9-9 of FIG. 8.
FIG. 10 is a perspective view of an illustrative embodiment of a center insert of FIG. 9, showing the center contact and the dielectric material which surrounds the center contact.
FIG. 11 is a graph illustrating the VSWR performance of the connector of FIG. 1 relative to the frequency.
FIG. 12 is a graph illustrating the VSWR performance of the connector of FIG. 6 relative to the frequency.

An embodiment is directed to a swept angle RF connector having a 3D printed conductive shell formed in one piece. The conductive shell has a mating connector receiving portion with a mating connector receiving surface and a mounting portion with mounting surface, the mating connector receiving surface extending in a plane which is essentially perpendicular to a plane in which the mounting surface extends. An arcuate portion extends between the mating connector receiving portion and the mounting portion. A dielectric receiving passage is provided in the arcuate portion, the dielectric receiving passage is in the shape of a swept angle or the arc of a circle and has a circular cross section. A dielectric insert is positioned in the dielectric receiving passage. The dielectric insert is in the shape of a swept angle or the arc of a circle and has a circular cross section which extends from a first surface proximate the mating connector receiving portion to a second surface proximate the mounting portion, the first surface extending in a plane which is essentially perpendicular to a plane in which the second surface extends, a contact receiving passage extending through the dielectric insert from the first surface to the second surface. A center contact is positioned in the contact receiving passage, the center contact is in the shape of a swept angle or the arc of a circle and has a circular cross section.

In an embodiment, the dielectric insert is made of different components. A first component is a solid member which extends approximately 180 degrees around the center contact. A second component has air pockets provided therein and extends approximately 180 degrees around the center contact, the component has air pockets provided therein.

In embodiment, a third component is provided. The third component extends 360 degrees around the center contact
In an embodiment, the connector is a sub-miniature push-on micro RF connector which maintains the signal integrity while changing the signal path 90 degrees in a small bending radius. The connector has a voltage standing wave ratio below 1.2 for signal frequencies up to 65GHz.

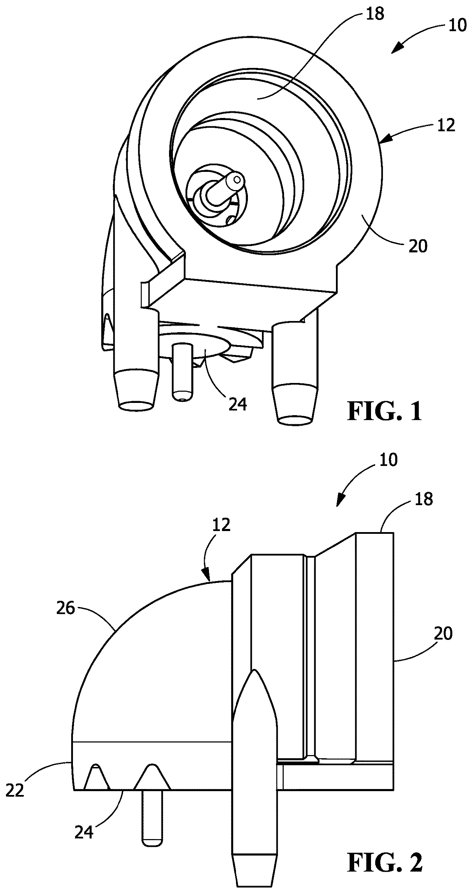

The swept right angle RF connector 10 illustrated in FIGS. 1 through 5 is for mounting to a substrate or a printed circuit board (not shown). The connector 10 includes a conductive or metal shell 12, a dielectric insert 14, and a center pin or contact 16. In the illustrative embodiment shown the swept right angle RF connector 10 is a Sub-Miniature Push-on Micro (SMPM) is a type of blind-mate, push-on connector with miniaturized dimensions and high (up to 65GHz) transmission frequency, however other types of connectors may be used. The SMPM connector is used in applications that require high precision, density and speed, such as phased array radars and board-to-board connections in Mil-Aero and Defense applications. While a swept right angle RF connection is shown, the RF connector may have a swept or bent angle of greater than 0 degrees and less than or equal to 90 degrees.

The metal shell 12 is formed in one piece by an additive process, such as 3D printing. In the illustrative embodiment shown, the shell 12 is made of metal, but other conductive material which provides the desired shielding may be used. The shell 12 has a mating connector receiving portion 18 with a mating connector receiving surface 20 and a substrate mounting portion 22 with substrate mounting surface 24. The mating connector receiving surface 20 extends in a plane which is essentially perpendicular to a plane in which the substrate mounting surface 24 extends.

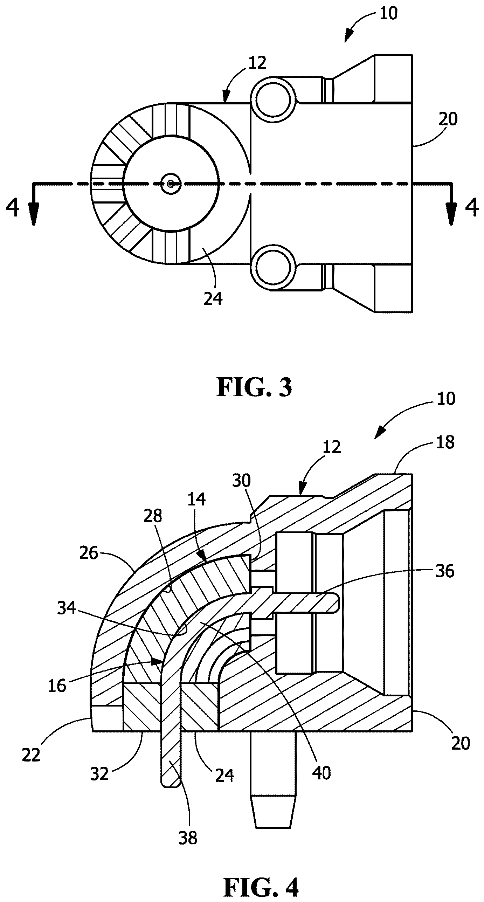

An arcuate portion 26 extends between the mating connector receiving portion 18 and the substrate mounting portion 22. A dielectric receiving passage 28 (FIG. 4) is provided in the arcuate portion 26. The dielectric receiving passage 28 extends from the mating connector receiving portion 18 to the substrate mating portion 22. The dielectric receiving passage 28 is in the shape of a swept right angle, arc of a circle or bend and has a circular cross section with a constant radius. However, other configuration may have a radii of varying sizes. The geometry of the arcuate portion is configured to provide the desired impedance requirement, such as, but not limited to, 50 Ohms. While the arcuate portion 26 is shown as a swept right angle or 90 degree arc of a circle, the arcuate portion may have a swept angle of greater than 0 degrees and less than or equal to 90 degrees, consistent with the angle of the of the connector 10.

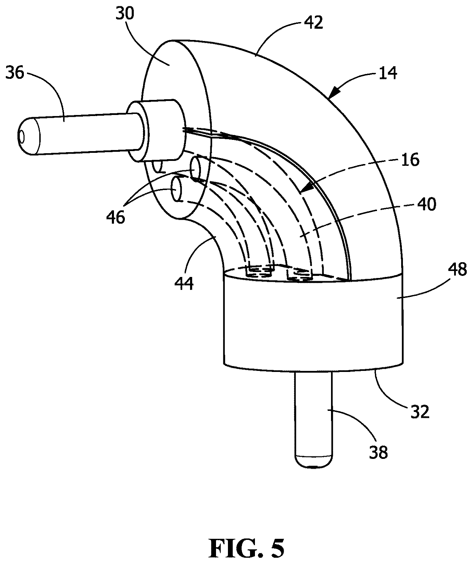

The dielectric insert 14 may be formed by different methods, including molding or an additive process, such as 3D printing. The dielectric insert 14 is made of an insulating material that is a poor conductor of electricity. The dielectric insert 14 is configured to be positioned in the dielectric receiving passage 28. As shown in FIGS. 4 and 5, the dielectric insert 14 is in the shape of a swept right angle, arc of a circle or bend and has a circular cross section with a constant radius which extends from a first surface 30 proximate the mating connector receiving portion 18 to a second surface 32 proximate the substrate mounting portion 22. However, other configuration may have a radii of varying sizes. The first surface 30 extends in a plane which is essentially perpendicular to a plane in which the second surface 32 extends. The radius of the dielectric insert 14 is approximately equal to the radius of the dielectric receiving passage 28. The dielectric insert 14 is designed to reduce the stray capacitance that results from the center contact 16 being bent. Stray capacitance will decrease the impedance of the connector. Minimizing stray capacitance allows the impedance to be higher, for example, in the illustrative embodiment shown, closer to the target of 50 Ohms. While the dielectric insert 14 is shown as a swept right angle or 90 degree arc of a circle, the dielectric insert 14 may have a swept angle of greater than 0 degrees and less than or equal to 90 degrees, consistent with the angle of the of the connector 10.

The center contact 16 is made of conductive material and is positioned in the contact receiving passage 34. The shape of the center contact 16 is a swept right angle, arc of a circle or bend and has a circular cross section with a constant radius. However, other configuration may have a radii of varying sizes. The radius of the center contact 16 is approximately equal to the radius of the contact receiving passage 34. The center contact 16 has a first straight portion 36 which extends into the mating connector receiving portion 18, a second straight portion 38 which extends into the substrate mounting portion 22, and an arcuate portion 40 which is positioned in the contact receiving passage 34 and which extends between the first straight portion 36 and the second straight portion 38. While the arcuate portion 40 is shown as a swept right angle or 90 degree arc of a circle, the arcuate portion 40 may have a swept angle of greater than 0 degrees and less than or equal to 90 degrees, consistent with the angle of the of the connector 10.

Referring again to the dielectric insert 14, the dielectric insert 14 can be easily varied to minimize the effect of stray capacitance and improve the impedance. In various embodiments, the dielectric insert 14 may be tuned with the use of materials with higher or lower dielectric constants. Alternatively, the structure of the dielectric insert 14 may be modified.

In the illustrative embodiment shown in FIGS. 1 through 5, the dielectric insert 14 is made of three components. In other embodiments the dielectric insert 14 may have different configurations, such as, but not limited to, a 3D printed single component.

As shown in FIG. 5, a first component 42 is a solid member which is positioned above the center contact 16 as viewed in FIG. 5. The first component 42 extends approximately 180 degrees around the center contact 16.

A second component 44 is positioned below the center contact 16 as viewed in FIG. 5. The second component 44 extends approximately 180 degrees around the center contact 16. The second component 44 has air pockets 46 provided therein. In the illustrative embodiment shown, the air pockets 46 are channels or tubes which extend through the second component 44, but other configurations may be used.

By modifying the dielectric insert 14 by introducing some air pockets 16, the effective dielectric constant of the dielectric insert 14 becomes a value between the dielectric constants of the air and the dielectric material. The dielectric constant can be easily adjusted by changing the dielectric material-to-air ratio, or in other words by increasing or decreasing air pocket volumes. In addition, the dielectric insert 14 can be fine-tuned locally, which means the air pocket volumes are controlled from location to location in the dielectric insert 14, so the effective dielectric constant of the dielectric insert 14 is different in different locations to match the impedance matching requirements and end up with smooth signal transmission. While the illustrative embodiment shows tubular air pockets 46, the second component 44 and the dielectric insert 14 may have other configurations and positioning of the air pockets.

A third component 48 is positioned below the first component 42 and the second component 44 as viewed in FIG. 5. The third component 48 extends 360 degrees around the center contact 16.

The dielectric strength of the first component 42, the second component 44 and the third component 48 may be the same or may be varied to provide the desired performance. In addition, the configuration of the swept angle or bend shape of the connector 10, the gap between the center pin or contact 16 and the metal shell 12 constant throughout the length of arcuate portion 26 of the shell 12, whereby the impedance thereof is controlled and is constant throughout the length so that the connector 10 is suitable for use with very high frequencies. As the shell 12 and center contact 16 are both formed as one piece, the risk of failure of the connector 10 due to shock or vibration is reduced when compared to known connectors.

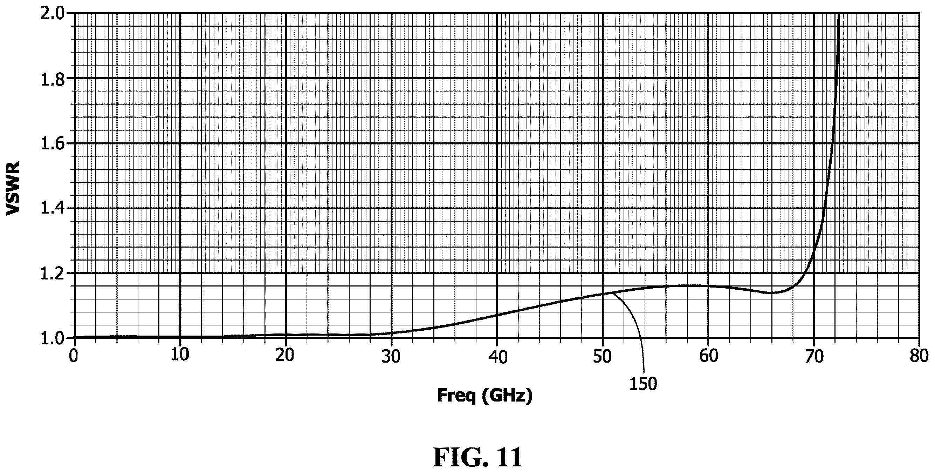

In the embodiment shown, the connector 10 is a sub-miniature push-on micro (SMPM) RF connector which maintains the signal integrity while changing the signal path 90 degrees in a small bending radius. As shown in FIG. 11, the illustrative connector 10 has a voltage standing wave ratio (VSWR) below 1.2 for signal frequencies up to 65GHz, as represented by curve 50. This allows the connector 10 to be used in applications which require high precision and high density.

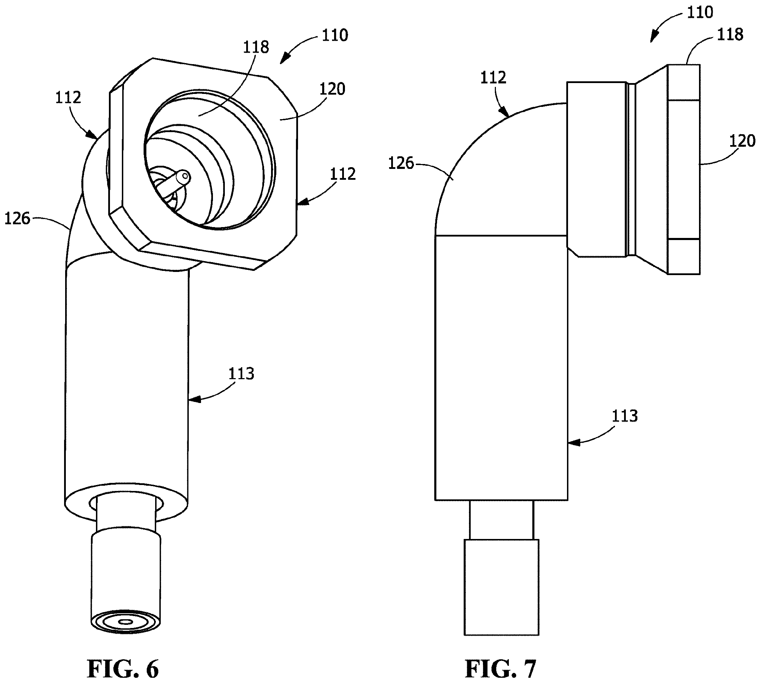

A second illustrative embodiment is shown in FIGS. 6 through 10. In this embodiment, the swept right angle RF connector 110 is for connecting a RF cable 111 to a mating connector (not shown). The connector 110 includes a first conductive or metal shell 112, a second a conductive or metal shell 113, a dielectric insert 114, and a center pin or contact 116. While a swept right angle RF connection is shown, the RF connector may have a swept or bent angle of greater than 0 degrees and less than or equal to 90 degrees.

The first metal shell 112 is formed in one piece by an additive process, such as 3D printing. In the illustrative embodiment shown, the shell 112 is made of metal, but other conductive material which provides the desired shielding may be used. The shell 112 has a mating connector receiving portion 118 with a mating connector receiving surface 120 and a cable mounting or receiving portion 122 with cable mounting or receiving surface 124. The mating connector receiving surface 120 extends in a plane which is essentially perpendicular to a plane in which the cable receiving surface 124 extends.

An arcuate portion 126 extends between the mating connector receiving portion 118 and the cable receiving portion 122. A dielectric receiving passage 128 is provided in the arcuate portion 126. The dielectric receiving passage 128 extends from the mating connector receiving portion 118 to the cable receiving portion 122. The dielectric receiving passage 128 is in the shape of a swept right angle, arc of a circle or bend and has a circular cross section with a constant radius. However, other configuration may have a radii of varying sizes. While the arcuate portion 126 is shown as a swept right angle or 90 degree arc of a circle, the arcuate portion 126 may have a swept angle of greater than 0 degrees and less than or equal to 90 degrees, consistent with the angle of the of the connector 110.

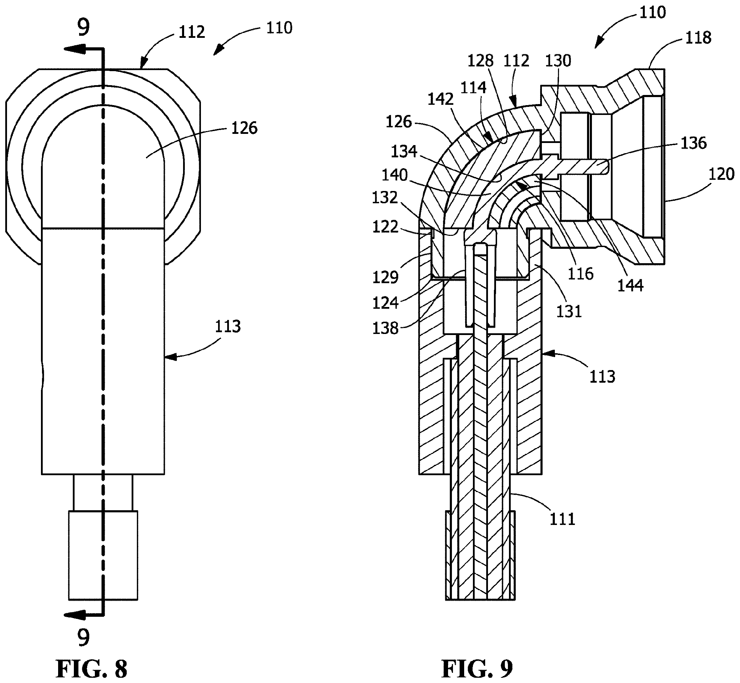

A receiving recess 129 (FIG. 9) is provided in the cable receiving portion 122 proximate the cable receiving surface 124. The receiving recess 129 is dimensioned to receive a mating portion 131 of the second metal shell 113. The second metal shell 113 is provided to cooperate with and properly position the cable 111 for mating with the first metal shell 112.

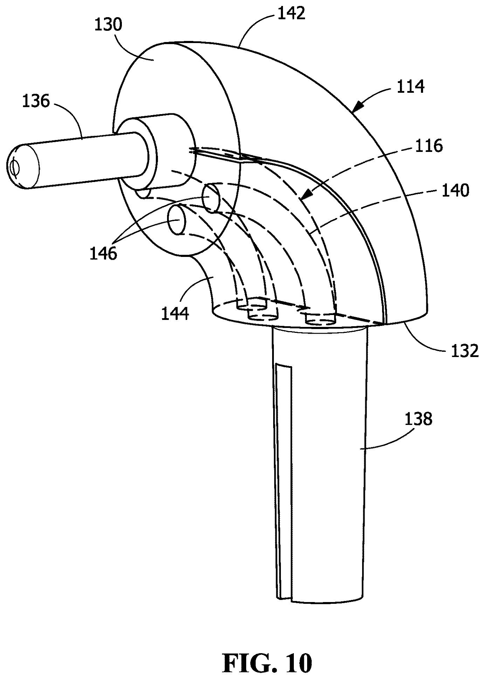

The dielectric insert 114, as shown in FIGS. 9 and 10, may be formed by different methods, including molding or an additive process, such as 3D printing. The dielectric insert 114 is made of an insulating material that is a poor conductor of electricity. The dielectric insert 114 is configured to be positioned in the dielectric receiving passage 128. The dielectric insert 114 is in the shape of a swept right angle, arc of a circle or bend and has a circular cross section with a constant radius which extends from a first surface 130 proximate the mating connector receiving portion 118 to a second surface 132 proximate the substrate mounting portion 122. However, other configuration may have a radii of varying sizes. The first surface 130 extends in a plane which is essentially perpendicular to a plane in which the second surface 132 extends. The radius of the dielectric insert 114 is approximately equal to the radius of the dielectric receiving passage 128. The dielectric insert 114 has a contact receiving passage 134 which extends through the dielectric insert 114 from the first surface 130 to the second surface 132. While the dielectric insert 114 is shown as a swept right angle or 90 degree arc of a circle, the dielectric insert 114 may have a swept angle of greater than 0 degrees and less than or equal to 90 degrees, consistent with the angle of the of the connector 10.

The center contact 116 is made of conductive material and is positioned in the contact receiving passage 134. The shape of the center contact 116 is a swept right angle, arc of a circle or bend and has a circular cross section with a constant radius. However, other configuration may have a radii of varying sizes. The radius of the center contact 116 is approximately equal to the radius of the contact receiving passage 134. The center contact 116 has a first straight portion 136 which extends into the mating connector receiving portion 18, a second straight portion 138 which extends from the substrate cable receiving portion 122, and a arcuate portion 140 which is positioned in the contact receiving passage 134 and which extends between the first straight portion 136 and the second straight portion 138. While the arcuate portion 140 is shown as a swept right angle or 90 degree arc of a circle, the arcuate portion 140 may have a swept angle of greater than 0 degrees and less than or equal to 90 degrees, consistent with the angle of the of the connector 10.

Referring again to the dielectric insert 114, the dielectric insert 114 can be easily varied to minimize the effect of stray capacitance and improve the impedance. In various embodiments, the dielectric insert 114 may be tuned with the use of materials with higher or lower dielectric constants. Alternatively, the structure of the dielectric insert 114 may be modified.

The dielectric insert 114 is made of two components. In other embodiments the dielectric insert 114 may have different configurations, such as, but not limited to, a 3D printed single component.

As shown in FIG. 10, a first component 142 is a solid member which is positioned above the center contact 116 as viewed in FIG. 10. The first component 142 extends approximately 180 degrees around the center contact 116.

A second component 144 is positioned below the center contact 116 as viewed in FIG. 10. The second component 144 extends approximately 180 degrees around the center contact 16. The second component 44 has air pockets 146 provided therein. In the illustrative embodiment shown, the air pockets 146 are channels or tubes which extend through the second component 144, but other configuration may be used.

By modifying the dielectric insert 114 by introducing some air pockets 16, the effective dielectric constant of the dielectric insert 114 becomes a value between the dielectric constants of the air and the dielectric material. The dielectric constant can be easily adjusted by changing the dielectric material-to-air ratio, or in other words by increasing or decreasing air pocket volumes. In addition, the dielectric insert 114 can be fine-tuned locally, which means the air pocket volumes are controlled from location to location in the dielectric insert 114, so the effective dielectric constant of the dielectric insert 114 is different in different locations to match the impedance matching requirements and end up with smooth signal transmission. While the illustrative embodiment shows tubular air pockets 146, the second component 144 and the dielectric insert 114 may have other configurations and positioning of the air pockets.

The dielectric strengths of the first component 142 and the second component 144 may be the same or may be varied to provide the desired performance. In addition, the configuration of the swept angle or bend shape of the connector 110, the gap between the center pin or contact 116 and the metal shell 112 constant throughout the length of arcuate portion 126 of the shell 112, whereby the impedance thereof is controlled and is constant throughout the length so that the connector 110 is suitable for use with very high frequencies. As the shell 112 and center contact 16 are both formed as one piece, the risk of failure of the connector 10 due to shock or vibration is reduced when compared to known connectors.

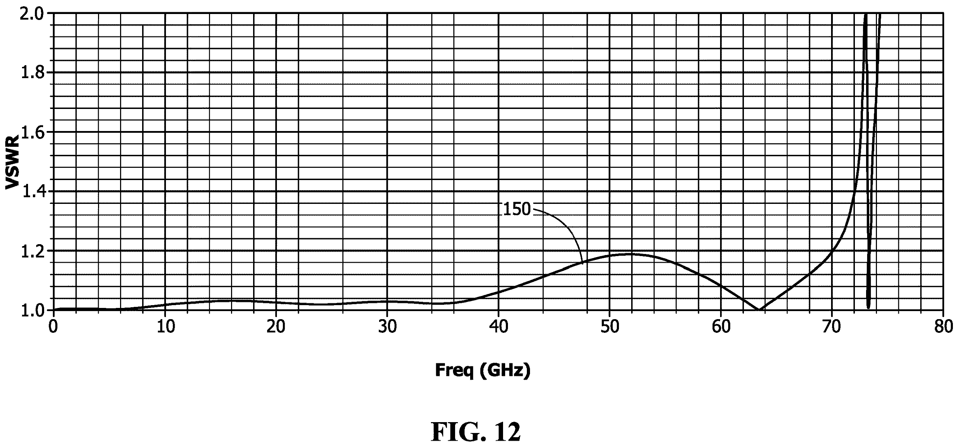

In the embodiment shown, the connector 110 maintains the signal integrity while changing the signal path 90 degrees in a small bending radius. As shown in FIG. 12, the illustrative connector 110 has a voltage standing wave ratio (VSWR) below 1.2 for signal frequencies up to at least 65GHz, as represented by curve 150. This allows the connector 110 to be used in applications which require high precisions and high density.

## Claims

1. A swept angle RF connector (10) comprising:
a 3D printed conductive shell (12) formed in one piece and having a mating connector receiving portion (18) with a mating connector receiving surface (20) and a mounting portion (22) with mounting surface (24), the mating connector receiving surface (20) extending in a plane which is essentially perpendicular to a plane in which the mounting surface (24) extends;
an arcuate portion (26) extending between the mating connector receiving portion (18) and the mounting portion (22), a dielectric receiving passage (28) provided in the arcuate portion, the dielectric receiving passage (28) is in the shape of a swept angle and has a circular cross section;
a dielectric insert (14) positioned in the dielectric receiving passage (28), the dielectric insert (14) is in the shape of a swept angle and has a circular cross section which extends from a first surface (30) proximate the mating connector receiving portion (18) to a second surface (32) proximate the mounting portion (22), the first surface (30) extending in a plane which is essentially perpendicular to a plane in which the second surface (32) extends, a contact receiving passage (34) extending through the dielectric insert (14) from the first surface (30) to the second surface (32);
a center contact (16) positioned in the contact receiving passage (34), the center contact (16) is in the shape of a swept angle and has a circular cross section.

2. The swept angle RF connector as recited in claim 1, wherein dielectric receiving passage (28) extends from the mating connector receiving portion (18) to the mounting portion (22).

3. The swept angle RF connector as recited in claim 1 or 2, wherein the radius of the dielectric insert (14) is approximately equal to the radius of the dielectric receiving passage (28).

4. The swept angle RF connector as recited in any preceding claim, wherein the radius of the center contact (16) is approximately equal to the radius of the contact receiving passage (34).

5. The swept angle RF connector as recited in any preceding claim, wherein the center contact (16) has a first straight portion (36) which extends into the mating connector receiving portion (18), a second straight portion (38) which extends into the mounting portion (22), and an arcuate portion (40) which is positioned in the contact receiving passage (34) and which extends between the first straight portion (36) and the second straight portion (38).

6. The swept angle RF connector as recited in any preceding claim, wherein the dielectric insert (14) is made of two (142, 144) or three (42, 44, 48) components.

7. The swept angle RF connector as recited in claim 6, wherein a component of the three components is a solid member (48) which extends approximately 180 degrees around the center contact (16).

8. The swept angle RF connector as recited in claim 6 or 7, wherein a component of the two or three components is a component (144, 44) which extends approximately 180 degrees around the center contact (116, 16), the component (144, 44) has air pockets (146, 46) provided therein.

9. The swept angle RF connector as recited in claim 8, wherein the air pockets (146, 46) are channels or tubes which extend through the second component (144, 44).

10. The swept angle RF connector as recited in any one of claims 6 to 9, wherein a component (48) of the three components extends 360 degrees around the center contact (16).

11. The swept angle RF connector as recited in any one of claims 6 to 10, wherein the dielectric strengths of the three components (42, 44, 48) are approximately the same.

12. The swept angle RF connector as recited in any one of claims 6 to 10, wherein the dielectric strengths of the three components (42, 44, 48) are different to one another.

13. The swept angle RF connector as recited in any preceding claim, wherein the connector is a sub-miniature push-on micro RF connector (10) which maintains the signal integrity while changing the signal path 90 degrees in a small bending radius.

14. The swept angle RF connector as recited in any preceding claim, wherein the connector has a voltage standing wave ratio below 1.2 for signal frequencies up to 65GHz.

15. The swept angle RF connector as recited in any preceding claim, wherein a second conductive shell (113) extends from the 3D printed conductive shell (113).
